# EUROPÄISCHE PATENTSCHRIFT

(11) **EP 0 915 279 B1**
(45) Veröffentlichungstag und Bekanntmachung des Hinweises auf die Patenterteilung: **24.07.2002**
(21) Anmeldenummer: 98121025.5
(22) Anmeldetag: 05.11.1998
(51) Int. Cl.: F16L 11/15, F16L 25/00, F16L 23/036

(54) **Flexible gewellte Leitung**
Flexible corrugated conduit
Conduite flexible ondulée

(30) Priorität: 07.11.1997 DE 19749252
(43) Veröffentlichungstag der Anmeldung: 12.05.1999
(73) Patentinhaber: Witzenmann GmbH, 75175 Pforzheim (DE)
(72) Erfinder: Berger, Peter W., 75181 Pforzheim-Eutingen (DE)
(74) Vertreter: Blumenröhr, Dietrich

(56) Entgegenhaltungen:
- EP-A- 0 557 594
- EP-A- 0 588 051
- DE-A- 2 019 081
- FR-A- 2 672 373
- GB-A- 1 561 770

## Beschreibung

Die Erfindung betrifft eine flexible Leitung zum Transport von fluiden Medien und insbesondere für Fernwärmeanwendungen. Derartige Leitungen werden meist als endlose Meterware ausgeliefert, wozu sie auf Trommeln aufgerollt werden. Werden Sie für Fernwärmeanwendungen in offenen Leitungsgräben oder grabenlos verlegt, so ist es außerdem erforderlich, daß sie hierbei an den Verlauf der vorhandenen Leitungen angepaßt werden und somit ausreichend flexibel sind, so daß sie um diese Leitungen herumgeführt werden können, ohne hierfür separate Leitungen mit gebogenem Verlauf zur Verfügung stellen zu müssen.

Der Nachteil an der für die Trommelbarkeit und die Umgehung von Hindernissen geforderten Flexibilität liegt aber darin, daß die flexible Leitung im Gegensatz zu einem starren Rohr bei Druckbeaufschlagung durch das zu transportierende Medium zur axialen Längung neigt, was an den Anschlußstellen wie etwa den Hauseintritten und Verbindungen zu Abzweigleitungen zu Problemen führt. Denn zwischen der sich längenden flexiblen Leitung und den Festpunkten treten Relativkräfte bzw. Relativbewegungen auf, die bis hin zu einem seitlichen Ausweichen oder Aufbäumen führen können und somit Instabilitäten im Leitungsverlauf hervorrufen, was wiederum die Betriebssicherheit beeinträchtigt.

Es ist bekannt, solche Leitungen durch schwach ausgeprägte Wellung des Schlauches und durch größere Wanddicken weniger flexibel zu gestalten. Darüber hinaus wird bei Anwendungen des Schlauches in Verbundleitungen - also beispielsweise bei den Fernwärmeanwendungen bei Verwendung der flexiblen Leitung als Innenschlauch und deren Kombination mit einem druckfesten Mantelrohr - auch versucht, die unerwünschte Längung durch ein zwar auch trommelbares, aber insgesamt steiferes und kaum einer Längenänderung unterworfenes Mantelrohr zu unterbinden, was die Flexibilität der gesamten Leitung natürlich entsprechend herabsetzt, sofern eine Kopplung von flexibler Leitung und Mantelrohr vorhanden ist. Durch das zusätzliche Mantelrohr und dessen Kopplung an die flexible Leitung wird allerdings der Herstellungsaufwand einer solchen Leitung erheblich erhöht.

Ganz allgemein gesagt, widersprechen sich die an die vorliegende flexible Leitung gestellten Anforderungen, denn zum einen sollte sie möglichst flexibel sein, um als Meterware aufgetrommelt geliefert werden und Hindernisse bei der Verlegung umgehen zu können, und zum anderen sollte sie starr genug sein, um bei Betriebsdruck keine wesentliche axiale Längenänderung durchzuführen.

Somit liegt der vorliegenden Erfindung die Aufgabe zugrunde, eine flexible Leitung zur Verfügung zu stellen, die trotz ihrer Flexibilität ohne wesentliche Längenänderung zur Aufnahme hoher Betriebsdrücke geeignet ist unabhängig davon, ob eine Anbindung an Festpunkte erfolgt oder nicht.

Diese Aufgabe wird erfindungsgemäß dadurch gelöst, daß die Leitung aus einem gewellten Schlauch besteht, daß der Schlauch mit einer flachen und ringförmigen Wellung versehen ist, und daß die flache Wellung durch nachträgliches Verformen durch Recken des gesamten zuvor mit einer steileren Wellung versehenen Schlauches hergestellt ist.

Hierdurch ergibt sich der Vorteil, daß durch das Verformen eine Eigenspannung in den Schlauch induziert wird, die den durch den jeweiligen maximalen Betriebsdruck ausgeübten Kräften entgegenwirkt und diese somit zumindest teilweise kompensiert. Das heißt, die durch das Verformen erzeugte Vorspannung bewirkt, daß der Schlauch sich einer weiteren Längung, wie sie durch das Wirken des Betriebsdruckes zu erwarten wäre, in hohem Maße widersetzt. Durch das Kompensieren der beiden Spannungen bzw. Drücke führt die Verwendung der Leitung unter normalem Betriebsdruck weder zu einer Ausbeulung noch zu einer wesentlichen Längung, die insgesamt lediglich in der Größenordnung von bis zu etwa 5 % liegt.

Nachdem der Betriebsdruck ohne größeren Auswirkungen auf den in erfindungsgemäßer Art und Weise hergestellten Schlauch bleibt, kann dieser entsprechend dünnwandiger ausgeführt werden, wodurch sich der Materialaufwand deutlich reduzieren läßt.

Die erfindungsgemäße Leitung ist trotz ihrer Stabilität aufgrund der Wellung und Dünnwandigkeit immer noch sehr gut trommelbar, also aufwickelbar, weist also neben der Stabilität und Druckfestigkeit größere Vorteile als der aufwendig gestaltete Stand der Technik auf.

Was die Gestaltung des Schlauches betrifft, so ist es besonders vorteilhaft, wenn die Wellen mit insbesondere geradlinig verlaufenden Flanken versehen sind und die Flanken einen gegenüber der Senkrechten zur Schlauchachse gemessenen Flankenwinkel von etwa im Bereich zwischen 20° und 50° aufweisen. Außerdem sollte der Schlauch aus Metall, insbesondere Edelstahl, und zweckmäßigerweise längsnahtgeschweißt ausgeführt sein.

Das nachträgliche Verformen wird dadurch hergestellt; daß der komplette Schlauch gereckt wird, etwa durch Eingreifen einer Rolle in die Wellungen, wobei die Breite der Rolle zumindest in Teilbereichen größer als die von ihr beaufschlagte Wellung ist.

In diesem Zusammenhang sei erwähnt, dass es aus der EP-A- 557 594 bereits bekannt ist, die letzten endständigen Wellen eines Metallschlauches, die mit einem Anschlusselement eine Bördelverbindung eingehen sollen, vor dem Zusammendrücken zu einem am Anschlusselement festzulegenden Dichtbund zu recken, um damit ihren Außendurchmesser und demgemäss die entsprechende Bohrung des Anschlusselementes zu reduzieren. Hierdurch führt das anschließende Zusammendrücken der endständigen Wellen zu einer größeren Überlappungsfläche des Dichtbundes mit dem Anschlusselement.

Insbesondere für die erwähnten Fernwärmeanwendungen empfiehlt es sich, den flexiblen Schlauch mit einem ihn umgebenden Mantelrohr zu einer Verbundleitung zu kombinieren und insbesondere auch zwischen Schlauch und Mantelrohr eine Isolierschicht vorzusehen. Solche Verbundleitungen - allerdings mit herkömmlichen flexiblen Schläuchen - sind aus der DE-A- 201 908 und EP-A- 588 051 bekannt.

Was die hierbei verwendete Isolierschicht betrifft, so ist es von Vorteil, wenn diese am Schlauch und am Mantelrohr festgelegt ist, wobei sich neben der entsprechenden, durch die Wellungen hergestellten formschlüssigen Verbindungen auch noch eine Haft- oder Klebverbindung eignet. Die Isolierschicht selbst sollte insbesondere aus PUR-Schaum bestehen.

Was das Mantelrohr betrifft, so kann dieses zwar glattwandig ausgebildet sein; besonders empfehlenswert ist es aber, wenn es mit einer Wellung versehen ist, um zum einen für das Auftrommeln besser biegbar zu sein und zum anderen um bei direkter Erdverlegung die Längskräfte besser auf das Erdreich übertragen zu können. Außerdem sollte das Mantelrohr aus Kunststoff hergestellt sein.

Es wird darüber hinaus ein Anschlußende für die flexible Verbundleitung vorgeschlagen, das dadurch gekennzeichnet ist, daß der Innenschlauch gegenüber dem Mantelrohr und der Isolierschicht axial vorsteht und der vorstehende Bereich von einem Haltering umgeben ist, wobei die innere Oberfläche des Halteringes an die Wellung des Innenschlauches angepaßt ist, daß der Haltering auf seiner Außenseite einen Vorsprung aufweist und mit diesem Vorsprung gegenüber der Axialrichtung formschlüssig an einem Außenring anliegt, und daß der Außenring von einem mit einem Anschlußflansch versehenen Anschlußgehäuse umgeben ist.

Durch ein derartiges Anschlußende läßt sich in geeigneter Weise ein Festpunkt beispielsweise für Fernwärmeleitungen herstellen, wie er etwa bei Hausanschlüssen sinnvoll ist. Hierbei sorgt der Haltering, der direkt am Innenschlauch angreift, für dessen Axialabstützung, wobei die Verbindung mit dem Anschlußgehäuse über einen insbesondere wärmedämmenden und druckfesten Außenring erfolgt.

Hierzu sollte der Haltering aus Metall bestehen und geteilt ausgeführt sein, also aus zwei etwa halbkreisförmigen Elementhälften bestehen. Da im Bereich des Anschlußendes die Isolierschicht entfernt ist, sollte der Außenring zur Erzeugung der Wärmedämmung aus Kunststoff ausgeführt sein.

Besonders vorteilhaft ist es außerdem, wenn zur Herstellung einer Anschlußverbindung mit einer Anschußleitung im endständigen Bereich des Schlauches ein Dichtring angeordnet ist und ein den Schlauch im Bereich des Dichtringes zumindest mittelbar umgreifendes und diesen zumindest mittelbar gegen eine Anschlußleitung festlegendes Befestigungselement vorgesehen ist, wenn in die Anschlußverbindung ein den Innenschlauch und/oder den Dichtring beaufschlagendes, gegebenenfalls mit der Anschlußleitung verbundenes Stützelement einbezogen ist, wenn die zumindest letzte Welle des Innenschlauches derart verformt ist, daß sie eine glatte Dichtfläche bildet und unter Vorspannung am Dichtring anliegt, und wenn das Stützelement als Widerlager für die von der verformten Welle des Innenschlauches und dem im Inneren des Innenschlauches herrschenden Innendruck auf den Dichtring ausgeübte Kraft dient. Hierdurch ergibt sich der Vorteil, daß aufgrund der Vorspannung nicht nur die Dichtwirkung im Bereich zwischen Dichtring und Innenschlauch erhöht wird, sondern darüber hinaus wird auch noch die Abdichtung auf der Rückseite des Dichtringes, also auf der dem Innenschlauch abgewandten Seite erhöht, da die verformte Welle den Dichtring sicher in den zugehörigen Dichtungssitz drückt. Zweckmäßigerweise ist die Verformung der letzten Welle derart ausgebildet, daß die Vorspannung nicht nur eine Axial-, sondern auch eine Radialkomponente aufweist und der Dichtring hierdurch noch besser fixiert wird.

Bezüglich der Ausgestaltung des Stützelementes sind verschiedene vorteilhafte Varianten möglich: So wird zum einen vorgeschlagen, daß das Stützelement den Dichtring trägt, wobei dann zweckmäßigerweise sowohl der Innenschlauch als auch die Anschlußleitung jeweils - von entgegengesetzten Richtungen her - am Dichtring anliegen; hierbei kann der Dichtring auch zweigeteilt ausgeführt sein, also einen radial umlaufenden, dem Innenschlauch zugeordneten Dichtring und einen ebenfalls umlaufenden, der Anschlußleitung zugeordneten Dichtring aufweisen, wobei zwischen beiden Dichtringen das Stützelement nach außen vorragen kann, um eine geeignete Anlagefläche für die Dichtringe herzustellen. In diesen Fällen ist das Stützelement ein umlaufend geschlossenes Bauteil und vorzugsweise auf der Schlauchinnenseite vorzusehen.

Zum anderen ist es auch möglich, daß das Stützelement die verformte Welle des Innenschlauches hintergreift, also beispielsweise in das letzte endständige Wellental vor der verformten Welle eingreift. Hierdurch und durch das Zusammenwirken mit dem Befestigungselement wird ein Festlager für den Innenschlauch gebildet, das zur Abstützung der verformten Welle dient, so daß diese ihre Vorspannkraft auf den Dichtring übertragen kann. In diesem Fall sitzt der Dichtring zweckmäßigerweise auf der Anschlußleitung, so daß der Innenschlauch und die Anschlußleitung über denselben Dichtring abgedichtet werden.

Im letztgeschilderten Fall ist das Stützelement geteilt und auf der Schlauchaußenseite angeordnet.

Besonders vorteilhaft ist es in diesem Zusammenhang, wenn das Befestigungselement die verformte Welle des Innenschlauches hintergreift, wodurch ein direkter Zusammenhang zwischen Festlegung des Innenschlauches und Dichtwirkungsverbesserung aufgrund der vorgespannten letzten Innenschlauchwelle hergestellt wird. Das Befestigungselement kann gleichzeitig auch die Anschlußleitung bzw. einen zugehörigen Bord, Flansch oder dergleichen hintergreifen und hierdurch beide Leitungen gleichzeitig gegeneinander verspannen.

Ein weiterer Vorteil der Erfindung kommt dann zum Tragen, wenn der Dichtring entlang großer Teile seines Umfanges von der verformten Welle des Innenschlauches und/oder dem Stützelement umgeben und formschlüssig gehalten ist, so daß die hierdurch erzielte Kammerung des Dichtringes dafür sorgt, daß auch solche Materialien eingesetzt werden können, die unter Umständen bei bestimmten Arbeitsbedingungen nicht so formstabil sind und ohne entsprechende Kammerung den Dichtungssitz verlassen würden.

Bezüglich des Dichtringmaterials empfiehlt es sich, diesen als Weichstoffdichtung und insbesondere aus Gummi, Silikon-Kautschuk oder PTFE auszubilden.

Das Stützelement sollte zweckmäßigerweise zur Festlegung des Dichtringes mit einer Durchmesseränderung versehen sein und beispielsweise eine umlaufende Sicke aufweisen, in der der Dichtring fixiert wird. Ebenso kann das Stützelement profiliert ausgebildet sein und die Profilierung ungefähr an die Wellenform der Schlauchleitung angepaßt sein, wodurch das vorstehend beschriebene Hintergreifen der letzten Welle des Innenschlauches verbessert und durch die flächige Anlage des Innenschlauches am Stützelement die hierbei erfolgende Festlegung erhöht wird. Insbesondere wenn das Stützelement auf der Außenseite des Innenschlauches angeordnet ist und in die Wellentäler des Innenschlauches eingreift, sollte das Stützelement zweckmäßigerweise geteilt ausgebildet sein.

Was das Befestigungselement betrifft, so sind im Stand der Technik bereits verschiedene Ausführungsformen bekannt, die jedoch in der Regel den Nachteil einer zu großen radialen Ausladung haben. Hierdurch sind sie beispielsweise für Anwendungen bei den erdverlegten Fernwärmeleitungen unbrauchbar. Gemäß der vorliegenden Erfindung wird vorgeschlagen, daß das Befestigungselement beispielsweise als ringförmige Schelle mit V-förmigen Querschnitt ausgebildet ist, wobei die beiden Randbereiche, also die V-Schenkel von einer ungefähr achsparallelen Erstreckung der Schellenbasis ausgehend derart nach innen gebogen werden, daß der eine Randbereich in ein endständiges Wellental des Innenschlauches eingreift und der andere Randbereich einen endständigen Bord der Anschlußleitung hintergreift und hierdurch die Schelle beide Leitungen gegeneinander festlegt. Um das Umbiegen der V-Schenkel zu erleichtern, sind die Randbereiche zweckmäßigerweise mit Profilierungen und/oder Aussparungen versehen, die die Formsteifigkeit etwas herabsetzen.

Die Schelle kann schließlich auch aus einem in einem Bereich des Umfangs offenen Ring bestehen, der mit einem Schloß versehen ist, wobei das Schloß eine umlegbare Blechlasche ist, die in einen Schlitz des gegenüberliegenden Ringendes verschoben wird oder wobei das Schloß aus ineinander verhakbaren Blechlaschen besteht, die an beiden Ringenden angebracht sind und gegen Öffnen gegeneinander verschränkt werden.

Schließlich kann die Schelle auch konisch ausgebildet sein und vor dem Verformen des Schlauchendes über den Schlauch geschoben und durch axiales Verschieben des Schlauchendes zusammen mit der Dichtung gegenüber der Anschlußleitung oder dem Stützelement fixiert werden. Hierbei kann die Fixierung der Schelle durch federnde oder verformbare Haltezungen erfolgen.

Weitere Merkmale und Vorteile der vorliegenden Erfindung ergeben sich aus der nachfolgenden Beschreibung eines Ausführungsbeispiels anhand der Zeichnungen; hierbei zeigen
- Figur 1: eine schematische Darstellung einer Verbundleitung mit erfindungsgemäßem flexiblen Schlauch in teilweise geschnittener Seitenansicht;
- Figur 2: den Innenschlauch der Verbundleitung in teilweise geschnittener Seitenansicht zur Verdeutlichung des Flankenwinkels;
- Figur 3: ein Anschlußende für die Verbundleitung;
- Figuren 4 bis 6: jeweils verschiedene Ausführungsformen erfindungsgemäßer Anschlußverbindungen in geschnittener Seitenansicht.

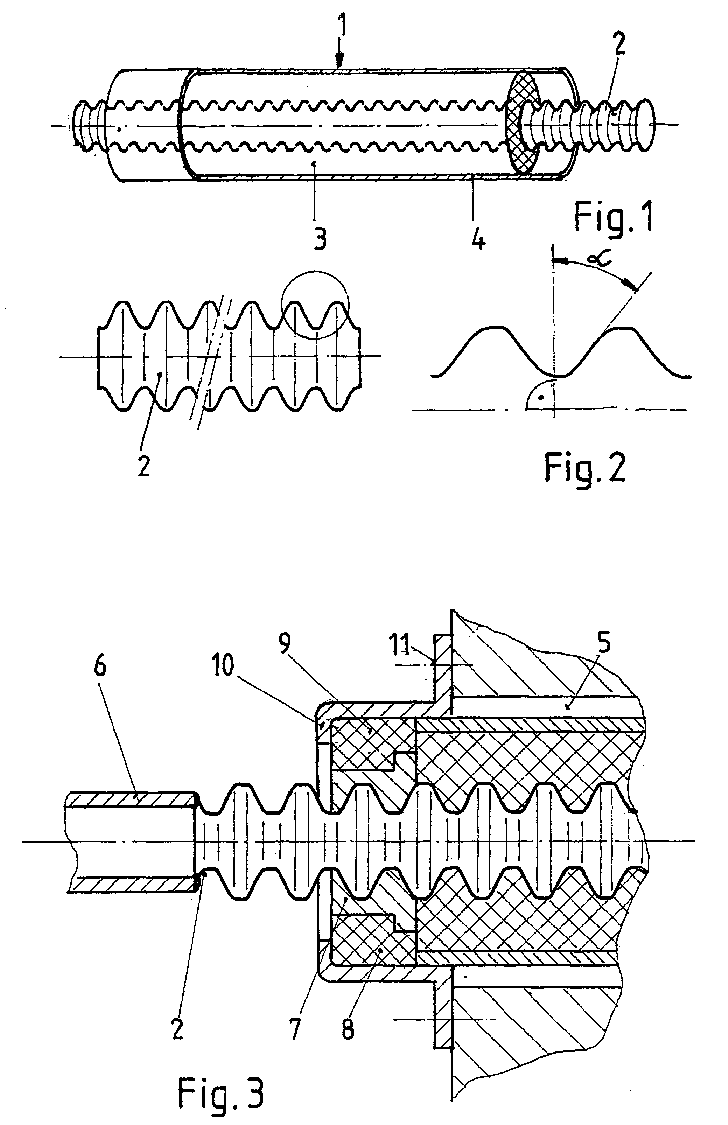

Die in Figur 1 dargestellte Verbundleitung 1 besteht aus einem ringgewellten Innenschlauch 2 aus Metall, einer diesen umgebenden Isolierschicht 3 aus PUR-Schaum sowie einem auf der Außenseite der Isolierschicht koaxial zum Innenschlauch angeordneten Mantelrohr 4 aus Kunststoff. Das in Figur 1 abgebildete Mantelrohr 4 ist glattwandig ausgeführt, jedoch sei erwähnt, daß sich für größere Rohrdurchmesser eine gewellte Ausführung empfiehlt, um die komplette Verbundleitung 1 besser auftrommeln zu können.

Die vorliegende Erfindung ist nun aus Figur 2 ersichtlich, wo der Innenschlauch 2 teilweise geschnitten dargestellt ist und geradlinig verlaufende Flanken erkennbar sind. Zu den Flanken ist ein Flankenwinkel α eingezeichnet, der gegenüber der Senkrechten zur Schlauchachse gemessen ist und in der Größenordnung von 20° bis 50° liegt.

Derartig flache Flankenwinkel lassen sich zwar direkt durch eine entsprechende Wellung erzielen; der besondere Vorteil der vorliegenden Erfindung kommt aber erst dadurch zum Tragen, daß die flache Wellung durch nachträgliches Verformen, insbesondere Recken des Innenschlauches hergestellt ist, wobei in den Innenschlauch eine Vorspannung induziert wird, die dem Betriebsdruck des durch den Innenschlauch hindurchgeführten Mediums entgegenwirkt und diesen zumindest teilweise kompensiert.

Figur 3 zeigt schließlich die Verbundleitung 1 in Seitenansicht, wobei diese eine Maueraussparung 5 durchquert zur Herstellung eines Hausanschlusses. Hierbei geht der Innenschlauch in eine glattwandige Hausanschlußleitung 6 über, wobei die gegenseitige Verbindung über geeignete vorstehend erläuterte Anschlußtechniken erreicht wird. Auf der Innenseite der Hauswand ist das Mantelrohr 4 und die Isolierschicht 3 abgetrennt und der Innenschlauch 2 alleine weitergeführt. In diesem vorstehenden Bereich ist der Innenschlauch von einem Haltering 7 umgeben, dessen Innenfläche an die Wellung des Innenschlauches angepaßt ist. An seiner Außenfläche weist der Haltering einen Vorsprung 8 auf, über den er formschlüssig mit einem auf der Außenseite des Halterings angeordneten Außenring 9 verbunden ist. Der Außenring 9 wiederum ist von einem Anschlußgehäuse 10 umgeben und liegt mit seiner der Hausleitung 6 zugewandten Stirnfläche an einer Wandung des Anschlußgehäuses 10 an.

Durch das formschlüssige Zusammenwirken von Innenschlauch 2 und Haltering 7 über die Wellungen sowie von Haltering 7 und Außenring 9 über den Vorsprung 8 sowie von Außenring 9 und Anschlußgehäuse 10 über die der Hausleitung 6 zugewandte Stirnseite und schließlich die Festlegung des Anschlußgehäuses 10 über einen Anschlußflansch 11 an die die Aussparung 5 umgebenden Hauswand wird ein Festpunkt für das Koaxialrohr gebildet, durch den dieses nicht nur gegenüber der Hauswand, sondern insbesondere auch gegenüber den hausinternen Leitungen unverschiebbar festgelegt ist.

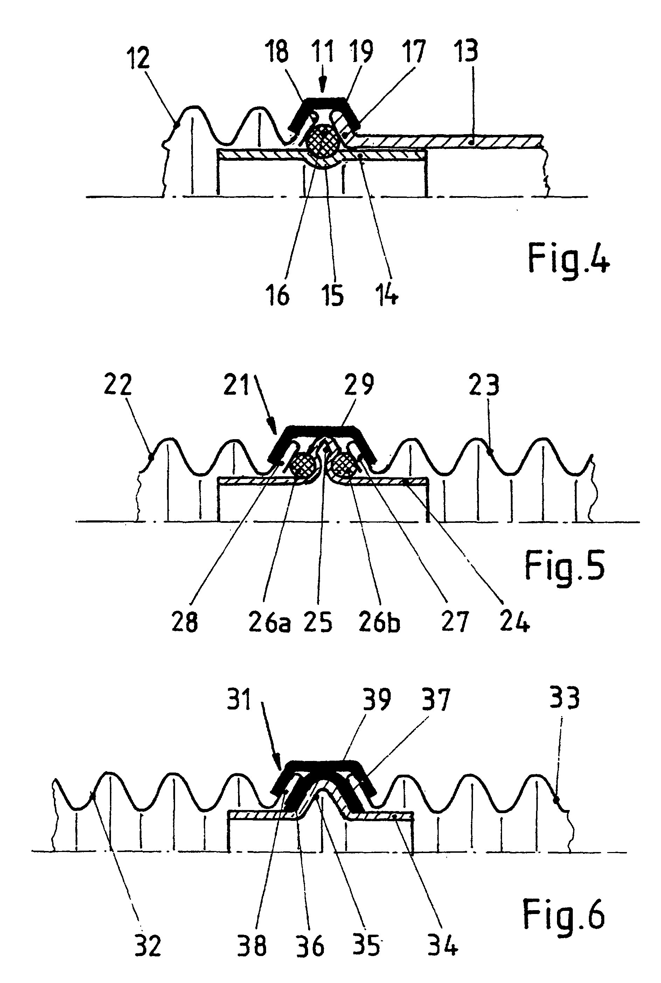

In Figur 4 ist eine erfindungsgemäße Anschlußverbindung 11 dargestellt, durch die ein ringgewellter Innenschlauch 12 und eine rohrförmige Anschlußleitung 13 miteinander verbunden sind. Hierzu sind die beiden Leitungen jeweils mit dem aufeinanderzugewandten Ende auf ein ringförmiges Stützelement 14 aufgesteckt, welches ungefähr in der Hälfte seiner Axialerstreckung eine Sicke 15 aufweist, in der ein Dichtring 16 angeordnet und gehalten ist. Beide Leitungen werden soweit aufeinanderzubewegt, bis sie in Anlage an den Dichtring gelangen, wobei sie zur Verbesserung der Dichtwirkung jeweils endständige Verformungen aufweisen, nämlich die Anschlußleitung 13 einen sich konisch aufweitenden Anschlußbord 17 und der Innenschlauch 12 eine verformte endständige Welle 18, deren ungefähr sinusförmige Wellung im Bereich des letzten Wellenberges derart umgebogen ist, daß die beiden Flanken des Wellenberges einen fast parallelen Verlauf aufweisen.

Durch diese Verformung der letzten Wellung 18 drückt der Innenschlauch elastisch gegen den Dichtring 16, wodurch die Dichtwirkung nicht nur auf der Seite des Innenschlauches, sondern auch auf der gegenüberliegenden Seite der Anschlußleitung verbessert wird.

Schließlich weist die Anschlußverbindung 11 noch ein Befestigungselement 19 auf, das aus einer V-förmigen Schelle besteht, deren beide schräg nach innen geneigten V-Schenkel das Verspannen des Innenschlauches und der Anschlußleitung gegen den Dichtring und somit gegen das Stützelement 14 bewirken und aufrechterhalten.

Die als Befestigungselement fungierende V-Schelle 19 hat den wesentlichen Vorteil, daß sie keinen viel größeren Durchmesser als der Innenschlauch selbst aufweist und somit problemlos selbst dort eingebaut werden kann, wo der Innenschlauch selbst in einem Außenrohr angeordnet ist, wie es beispielsweise bei den Fernwärmeleitungen der Fall ist.

In Figur 5 ist eine ähnliche Bauform einer Anschlußverbindung wie in Figur 4 dargestellt, wobei die Anschlußverbindung 21 einen Innenschlauch 22 mit einer weiteren Schlauchleitung 23 verbindet und beide Schlauchleitungen über eine als Befestigungselement fungierende V-förmige Schelle 29 gegeneinander gedrückt werden, wobei die Schelle 29 der Schelle 19 aus Figur 1 entspricht. Zwischen den beiden Schlauchleitungen 22 und 23 erstreckt sich nicht nur ein Dichtring, vielmehr ist ein Stützelement 24 vorgesehen, das mit einer Querschnittsvergrößerung 25 versehen ist, die in ungefähr gleichem Maße gegenüber den beiden rohrförmigen Endstücken des Stützelementes 24, auf die die endständigen Schlauchleitungen aufgeschoben sind, vorsteht, wie die Wellenberge gegenüber den Wellentälern der beiden Schlauchleitungen, also die Profilhöhe der jeweiligen Wellungen.

Beide Schlauchleitungen 22, 23 besitzen eine letzte Welle 27, 28, die in gleicher Weise wie die Welle 18 aus Figur 4 verformt ist. Außerdem ist jeder Schlauchleitung ein eigener Dichtring 26a, 26b zugeordnet. Die Querschnittsvergrößerung 25 des Stützelementes 24 weist eine ungefähr Ω-förmige Struktur auf, wobei die beiden Dichtringe 26a, 26b in den unteren nahezu runden Übergangsbereichen zwischen den zylindrischen Endstücken des Stützelementes und der Querschnittserweiterung angeordnet sind. Hierdurch sind die Dichtringe entlang großer Teile ihres Umfanges von der Schlauchleitung bzw. dem Stützelement umgeben und somit insbesondere gegenüber dem durch die Schlauchleitung transportiertem Medium abgeschottet. Hierdurch lassen sich für die Dichtringe auch solche Materialien verwenden, die ansonsten bei einer nichtformschlüssigen Fixierung zu einer Verformung und somit zum Auswandern aus dem Dichtungssitz tendieren würden.

Das Befestigungselement 29 drückt die beiden letzten Wellen 27, 28 aufeinander zu, wobei die Vorspannungen für ein Andrücken der Wellen an die Dichtringe 26a, 26b und deren Anpressen gegen das Stützelement 24 sorgen.

In Figur 6 ist wiederum eine Anschlußverbindung 31 dargestellt, die in etwa derjenigen aus Figur 5 entspricht, wobei jedoch das Stützelement 34 nicht eine Ω-förmige Querschnittserweiterung 25, sondern eine dachförmige Querschnittserweiterung 35 aufweist. Außerdem sind die beiden Dichtringe 26a und 26b aus Figur 5 im vorliegenden Fall durch einen Dichtring 36 ersetzt, der in seinem Querschnitt der Dachform der Querschnittserweiterung 35 folgt. Hierdurch wird sichergestellt, daß die letzten Wellungen 37, 38 mit großflächigen Flankenbereichen an dem Dichtring 36 anliegen.

Zusammenfassend bietet die vorliegende Erfindung den Vorteil, daß eine trommelbare flexible Leitung zur Verfügung gestellt wird, die selbstkompensierend ist und sich durch einen gegenüber dem Stand der Technik drastisch reduzierten Materialaufwand auszeichnet.

## Patentansprüche

1. Flexible Leitung zum Transport von fluiden Medien und insbesondere für Fernwärmeanwendungen, wobei die Leitung aus einem gewellten Schlauch (2) besteht, der über seine gesamte Länge mit einer flachen und ringförmigen Wellung versehen ist,
**dadurch gekennzeichnet,**
**daß** die flache Wellung durch nachträgliches Recken der zuvor mit steileren Flanken hergestellten Wellung des Schlauches hergestellt ist.

2. Flexible Leitung nach Anspruch 1,
**dadurch gekennzeichnet,**
**daß** die Wellen des Schlauches (2) zwischen den außenliegenden Wellenbergen und den innenliegenden Wellentälern angeordnete Flanken aufweisen, und daß die Wellenflanken geradlinig verlaufen.

3. Flexible Leitung nach Anspruch 2,
**dadurch gekennzeichnet,**
**daß** die Wellenflanken des flachgewellten Schlauches (2) einen gegenüber der Senkrechten zur Schlauchachse gemessenen Flankenwinkel von etwa im Bereich 20° und 50° aufweisen.

4. Flexible Leitung nach zumindest einem der vorstehenden Ansprüche,
**dadurch gekennzeichnet,**
**daß** der Schlauch (2) ein druckfester Metallschlauch insbesondere aus Edelstahl ist.

5. Flexible Leitung nach zumindest einem der vorstehenden Ansprüche,
**dadurch gekennzeichnet,**
**daß** der Schlauch (2) ein längsnahtgeschweißter, ringgewellter Schlauch ist.

6. Flexible Leitung nach zumindest einem der vorstehenden Ansprüche,
**dadurch gekennzeichnet,**
**daß** die Leitung aus dem gewellten Schlauch (2) und einem diesen umgebenden Mantelrohr (4) besteht.

7. Flexible Leitung nach Anspruch 6,
**dadurch gekennzeichnet,**
**daß** zwischen Schlauch (2) und Mantelrohr (4) eine Isolierschicht (3) angeordnet ist.

8. Flexible Leitung nach Anspruch 7,
**dadurch gekennzeichnet,**
**daß** die Isolierschicht (3) am Schlauch (2) und/oder am Mantelrohr (4) festgelegt ist und insbesondere aus PUR-Schaum besteht.

9. Flexible Leitung nach zumindest einem der vorstehenden Ansprüche 6 bis 8,
**dadurch gekennzeichnet,**
**daß** das Mantelrohr (4) glattwandig ausgebildet ist und insbesondere aus Kunststoff besteht.

10. Flexible Leitung nach zumindest einem der vorstehenden Ansprüche 6 bis 8,
**dadurch gekennzeichnet,**
**daß** das Mantelrohr (4) mit einer Wellung versehen ist.

11. Flexible Leitung nach zumindest einem der vorstehenden Ansprüche 6 bis 10,
**dadurch gekennzeichnet,**
**daß** der Schlauch (2) gegenüber dem Mantelrohr (4) und der Isolierschicht (3) zur Bildung eines Anschlußendes axial vorsteht, daß der vorstehende Bereich von einem Haltering (7) umgeben ist, wobei die innere Oberfläche des Halterings an die Wellung des Schlauches angepaßt ist, daß der Haltering auf seiner Außenseite einen Vorsprung (8) aufweist und mit diesem Vorsprung gegenüber der Axialrichtung formschlüssig an einem Außenring (9) anliegt, und daß der Außenring von einem mit einem Anschlußflansch (11) versehenen Anschlußgehäuse (10) umgeben ist.

12. Flexible Leitung nach Anspruch 11,
**dadurch gekennzeichnet,**
**daß** der Haltering (7) aus Metall besteht.

13. Flexible Leitung nach Anspruch 11,
**dadurch gekennzeichnet,**
**daß** der Haltering geteilt ausgebildet ist.

14. Flexible Leitung nach Anspruch 11,
**dadurch gekennzeichnet,**
**daß** der Außenring (9) aus Kunststoff besteht.

15. Flexible Leitung nach zumindest einem der vorstehenden Ansprüche,
**dadurch gekennzeichnet,**
**daß** zur Bildung einer Anschlußverbindung (11, 21, 31) in einem endständigen Bereich des Schlauches (12, 22, 32) ein Dichtring (16, 26a, 26b, 36) angeordnet ist und ein den Schlauch im Bereich des Dichtringes zumindest mittelbar umgreifendes und diesen zumindest mittelbar gegen eine Anschlußleitung (13, 23, 33) festlegendes Befestigungselement (19, 29, 39) vorgesehen ist.

16. Flexible Leitung nach Anspruch 15,
**dadurch gekennzeichnet,**
**daß** in die Anschlußverbindung ein den Schlauch und/oder den Dichtring beaufschlagendes, gegebenenfalls mit der Anschlußleitung verbundenes Stützelement (14, 24, 34) einbezogen ist, daß die zumindest letzte Welle (18, 28, 38) der Schlauchleitung derart verformt ist, daß sie eine glatte Dichtfläche bildet und unter Vorspannung am Dichtring anliegt, und daß das Stützelement als Widerlager für die von der verformten Welle der Schlauchleitung und dem Betriebsdruck auf den Dichtring ausgeübte Vorspannkraft dient.

17. Flexible Leitung nach zumindest einem der vorstehenden Ansprüche 15 bis 16,
**dadurch gekennzeichnet,**
**daß** das Befestigungselement (19, 29, 39) aus einer einstückigen ringförmigen Schelle besteht, daß die Schelle eine insbesondere etwa parallel zur Schlauchachse verlaufenden Basis aufweist, sowie einen sich hieran anschließenden, umlaufenden und die Schlauchleitung umgreifenden ersten Randbereich und einen sich ebenfalls an die Basis an der gegenüberliegenden Seite anschließenden, die Anschlußleitung umgreifenden zweiten Randbereich.

18. Flexible Leitung nach Anspruch 16,
**dadurch gekennzeichnet,**
**daß** der Dichtring (16, 26a, 26b, 36) dadurch gekammert ist, daß er entlang großer Teile seines auf einen Axialschnitt bezogenen Umfanges von der verformten Welle (18, 28, 38) der Schlauchleitung (12, 22, 32) und/oder dem Stützelement (14, 24, 34) umgeben und formschlüssig gehalten ist.

19. Flexible Leitung nach Anspruch 16,
**dadurch gekennzeichnet,**
**daß** das Stützelement (14, 24, 34) zur Festlegung des Dichtringes (16, 26a, 26b, 36) mit einer Durchmesseränderung (15, 25, 35) versehen ist.

20. Flexible Leitung nach Anspruch 15,
**dadurch gekennzeichnet,**
**daß** das Befestigungselement (19, 29, 39) als V-förmige Schelle ausgebildet ist.

## Claims

1. Flexible conduit for conveying fluid media and especially for district heating applications, the conduit consisting of a corrugated flexible tube (2) which is provided over its entire length with shallow and annular corrugations,
**characterised in that**
the shallow corrugations are produced by subsequent stretching of the corrugations of the flexible tube, which have previously been made with steeper flanks.

2. Flexible conduit according to claim 1,
**characterised in that**
the corrugations of the flexible tube (2) have flanks arranged between the outer peaks and the inner troughs, and the corrugation flanks extend in a straight line.

3. Flexible conduit according to claim 2,
**characterised in that**
the corrugation flanks of the shallowly corrugated flexible tube (2) have a flank angle, measured with respect to the perpendicular to the tube axis, approximately in the range of from 20° to 50°.

4. Flexible conduit according to at least one of the preceding claims,
**characterised in that**
the flexible tube (2) is a pressure-resistant flexible metal tube, especially of special steel.

5. Flexible conduit according to at least one of the preceding claims,
**characterised in that**
the flexible tube (2) is an annularly corrugated flexible tube welded along a longitudinal seam.

6. Flexible conduit according to at least one of the preceding claims,
**characterised in that**
the conduit consists of the corrugated flexible tube (2) and a tubular jacket (4) surrounding the latter.

7. Flexible conduit according to claim 6,
**characterised in that**
an insulating layer (3) is arranged between the flexible tube (2) and the tubular jacket (4).

8. Flexible conduit according to claim 7,
**characterised in that**
the insulating layer (3) is fixed in place on the flexible tube (2) and/or on the tubular jacket (4) and consists especially of PUR foam.

9. Flexible conduit according to at least one of preceding claims 6 to 8,
**characterised in that**
the tubular jacket (4) is smooth-walled and consists especially of plastics.

10. Flexible conduit according to at least one of preceding claims 6 to 8,
**characterised in that**
the tubular jacket (4) is provided with corrugations.

11. Flexible conduit according to at least one of preceding claims 6 to 10,
**characterised in that**
the flexible tube (2) projects axially relative to the tubular jacket (4) and the insulating layer (3) to form a connection end; the projecting region is surrounded by a holding ring (7), the inner surface of the holding ring being matched to the corrugations of the flexible tube; the holding ring has a projection (8) on its outer side and, by means of that projection, is in interlocking engagement, relative to the axial direction, with an outer ring (9); and the outer ring is surrounded by a connecting housing (10) which is provided with a connecting flange (11).

12. Flexible conduit according to claim 11,
**characterised in that**
the holding ring (7) consists of metal.

13. Flexible conduit according to claim 11,
**characterised in that**
the holding ring is divided.

14. Flexible conduit according to claim 11,
**characterised in that**
the outer ring (9) consists of plastics.

15. Flexible conduit according to at least one of the preceding claims,
**characterised in that**
to form a joint (11, 21, 31), a sealing ring (16, 26a, 26b, 36) is arranged in an end region of the flexible tube (12, 22, 32), and a fastening element (19, 29, 39) is provided, which fastening element (19, 29, 39) engages at least indirectly around the flexible tube in the region of the sealing ring and, at least indirectly, fixes it in place against a joining conduit (13, 23, 33).

16. Flexible conduit according to claim 15,
**characterised in that**
there is integrated into the joint a support element (14, 24, 34), which acts upon the flexible tube and/or the sealing ring and which is optionally connected to the joining conduit; at least the last corrugation (18, 28, 38) of the flexible conduit is deformed in such a manner that it forms a smooth sealing surface and rests, under bias, against the sealing ring; and the support element serves as a bearing for the tensioning force exerted on the sealing ring by the deformed corrugation of the flexible conduit and by the operating pressure.

17. Flexible conduit according to at least one of preceding claims 15 and 16,
**characterised in that**
the fastening element (19, 29, 39) consists of a one-piece annular clip; the clip has a base extending especially approximately parallel to the axis of the flexible tube and, adjoining the base, a circumferential first rim region that engages around the flexible conduit and, likewise adjoining the base on the opposite side, a second rim region that engages around the joining conduit.

18. Flexible conduit according to claim 16,
**characterised in that**
the sealing ring (16, 26a, 26b, 36) is enclosed in such a manner that over large portions of its circumference, based on an axial section, it is surrounded and held interlockingly by the deformed corrugation (18, 28, 38) of the flexible conduit (12, 22, 32) and/or by the support element (14, 24, 34).

19. Flexible conduit according to claim 16,
**characterised in that**
for fixing the sealing ring (16, 26a, 26b, 36) in place, the support element (14, 24, 34) is provided with a change of diameter (15, 25, 35).

20. Flexible conduit according to claim 15,
**characterised in that**
the fastening element (19, 29, 39) is in the form of a V-shaped clip.

## Revendications

1. Conduite flexible pour le transport de produits fluides et notamment pour des applications de chauffage à grande distance, la conduite étant constituée d'un tuyau flexible ondulé (2), muni sur toute sa longueur d'une légère ondulation de forme annulaire, **caractérisée en ce que** l'ondulation légère est réalisée par étirage ultérieur de l'ondulation plus accentuée du tuyau flexible réalisée préalablement.

2. Conduite flexible selon la revendication 1, **caractérisée en ce que** les ondulations du tuyau flexible (2) présentent des flancs placés entre les sommets de l'onde situés à l'extérieur et les creux de l'onde situés à l'intérieur, et **en ce que** les flancs de l'onde s'étendent en ligne droite.

3. Conduite flexible selon la revendication 2, **caractérisée en ce que** les flancs de l'onde du tuyau flexible (2) légèrement ondulé présentent un angle de flanc mesuré par rapport à la verticale de l'axe du tuyau et compris environ entre 20° et 50°.

4. Conduite flexible selon au moins l'une des revendications précédentes, **caractérisée en ce que** le tuyau flexible (2) est un tuyau métallique résistant à la pression, notamment en acier spécial.

5. Conduite flexible selon au moins l'une des revendications précédentes, **caractérisée en ce que** le tuyau flexible (2) est un tuyau soudé en longueur, ondulé en anneaux.

6. Conduite flexible selon au moins l'une des revendications précédentes, **caractérisée en ce que** la conduite est constituée du tuyau flexible (2) ondulé et d'un tube fourreau (4) entourant celui-ci.

7. Conduite flexible selon la revendication 6, **caractérisée en ce qu**'une couche isolante (3) est placée entre le tuyau flexible (2) et le tube fourreau (4).

8. Conduite flexible selon la revendication 7, **caractérisée en ce que** la couche isolante (3) est fixée sur le tuyau flexible (2) et/ou sur le tube fourreau (4) et est constituée notamment de mousse PUR.

9. Conduite flexible selon au moins l'une des revendications précédentes 6 à 8, **caractérisée en ce que** le tube fourreau (4) est à paroi lisse et est constitué notamment de matière plastique.

10. Conduite flexible selon au moins l'une des revendications précédentes 6 à 8, **caractérisée en ce que** le tube fourreau (4) est muni d'une ondulation.

11. Conduite flexible selon au moins l'une des revendications précédentes 6 à 10, **caractérisée en ce que** le tuyau flexible (2) dépasse axialement par rapport au tube fourreau (4) et à la couche isolante (3) pour former une extrémité de raccordement, **en ce que** la partie saillante est entourée d'un anneau de support (7), la surface intérieure de l'anneau de support étant adaptée à l'ondulation du tuyau flexible, **en ce que** l'anneau de support présente une saillie (8) sur son côté extérieur et est adjacent avec cette saillie par conjonction de forme à un anneau extérieur (9) par rapport à la direction axiale, et **en ce que** l'anneau extérieur est entouré d'un boîtier de raccordement (10) muni d'une bride de raccordement (11).

12. Conduite flexible selon la revendication 11, **caractérisée en ce que** l'anneau de support (7) est constitué de métal.

13. Conduite flexible selon la revendication 11, **caractérisée en ce que** l'anneau de support (7) est formé de manière séparée.

14. Conduite flexible selon la revendication 11, **caractérisée en ce que** l'anneau extérieur (9) est constitué de plastique.

15. Conduite flexible selon au moins l'une des revendications précédentes, **caractérisée en ce que,** pour la formation d'une liaison de raccordement (11, 21, 31), une bague d'étanchéité (16, 26a, 26b, 36) est placée dans'une partie terminale du tuyau flexible (12, 22, 32) et qu'il est prévu un élément de fixation (19, 29, 39) enveloppant au moins indirectement le tuyau flexible dans la partie de la bague d'étanchéité et fixant celle-ci au moins indirectement contre une conduite de branchement (13, 23, 33).

16. Conduite flexible selon la revendication 15, **caractérisée en ce qu**'un élément de support (14, 24, 34) contraignant le tuyau flexible et/ou la bague d'étanchéité, raccordé éventuellement à la conduite de raccordement, est intégré dans la liaison de raccordement, **en ce qu'**au moins la dernière onde (18, 28, 38) de la conduite flexible est déformée de telle sorte qu'elle forme une surface d'étanchéité lisse et est adjacente à la bague d'étanchéité en précontrainte, et **en ce que** l'élément de support sert de contre-butée pour la force de précontrainte exercée par l'onde déformée de la conduite flexible et par la pression de fonctionnement sur la bague d'étanchéité.

17. Conduite flexible selon au moins l'une des revendications précédentes 15 à 16, **caractérisée en ce que** l'élément de fixation (19, 29, 39) est composé d'un collier de serrage de forme annulaire d'une seule pièce, **en ce que** le collier de serrage présente notamment une base à peu près parallèle à l'axe du tuyau flexible, ainsi qu'une première partie de bord qui y est adjacente, périphérique, entourant la conduite flexible et une deuxième partie de bord également adjacente à la base sur le côté opposé, entourant la conduite de branchement.

18. Conduite flexible selon la revendication 16, **caractérisée en ce que** la bague d'étanchéité (16, 26a, 26b, 36) est enfermée par le fait qu'elle est entourée le long de grandes parties de son pourtour par rapport à une coupe axiale de l'onde (18, 28, 38) déformée de la conduite flexible (12, 22, 32) et/ou de l'élément de support (14, 24, 34) et maintenue par conjonction de forme.

19. Conduite flexible selon la revendication 16, **caractérisée en ce que** l'élément de support (14, 24, 34) est muni d'une modification de diamètre (15, 25, 35) pour la fixation de la bague d'étanchéité (16, 26a, 26b, 36).

20. Conduite flexible selon la revendication 15, **caractérisée en ce que** l'élément de fixation (19, 29, 39) est formé comme un collier de serrage en forme de V.
